(19) **Europäisches Patentamt European Patent Office Office européen des brevets**

(11) **EP 4 553 788 A1**

(12) **EUROPEAN PATENT APPLICATION**

(43) Date of publication:
**14.05.2025 Bulletin 2025/20**

(21) Application number: **23208671.0**

(22) Date of filing: **08.11.2023**

(51) International Patent Classification (IPC):
**G06V 10/82** *(2022.01)* **G06N 3/045** *(2023.01)*
**G06T 7/10** *(2017.01)* **G06T 7/194** *(2017.01)*
**G06V 20/58** *(2022.01)*

(52) Cooperative Patent Classification (CPC):
**G06V 10/82; G06N 3/045; G06V 20/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VOLKSWAGEN AG**
**38440 Wolfsburg (DE)**

(72) Inventors:
• **Bayzidi, Yasin**
  **38102 Braunschweig (DE)**
• **Yang, Yutong**
  **80798 München (DE)**

(54) **OBJECT DETECTION USING A TRAINED NEURAL NETWORK**

(57) The present invention is related to a method, a computer program, and an apparatus for training a neural network for object detection, and to a respective trained neural network. The invention is further related to a method, a computer program, and an apparatus for object detection with a trained neural network, and to a vehicle equipped with a perception system, which makes use of such a method or apparatus. In a first step, an input image is received (10), which is then processed (11) with the neural network. Latent activations for the image are extracted (12) from one or more layers of the neural network and a latent heatmap is generated (13) from these latent activations. If not yet available, a ground truth mask for the input image may be generated (14) by converting bounding boxes representing object instances into a binary mask. A heatmap loss between the latent heatmap and the ground truth mask is then determined (15). At least the heatmap loss is backpropagated (16) for training the neural network.

FIG. 8

EP 4 553 788 A1

**Description**

The present invention is related to a method, a computer program, and an apparatus for training a neural network for object detection, and to a respective trained neural network. The invention is further related to a method, a computer program, and an apparatus for object detection with a trained neural network, and to a vehicle equipped with a perception system, which makes use of such a method or apparatus.

Autonomous driving, also referred to as automatic driving, automated driving, or piloted driving, is the movement of vehicles, mobile robots and driverless transport systems that are largely autonomous. There are different degrees of autonomous driving. In Europe, various transport ministries, for example the Federal Institute for Road Systems (Bundesanstalt für Straßenwesen) in Germany, have defined the following autonomous stages:

- Level 0: "Driver only", the driver drives himself, steers, accelerates, brakes, etc.
- Level 1: Certain assistance systems help with vehicle operation, including a cruise control system such as ACC (Automatic Cruise Control).
- Level 2: Partial automation. Therein, automatic parking, tracking function, general longitudinal guidance, acceleration, deceleration, etc. are taken over by the assistance systems, including collision avoidance.
- Level 3: High automation. The driver does not have to monitor the system continuously. The vehicle independently performs functions such as the triggering of the turn signal, lane change and tracking. The driver can turn to other things, but if requested, the driver has to take over control within a pre-warning period.
- Level 4: Full automation. The guidance of the vehicle is permanently performed by the system. If the system is no longer able to handle the tasks, the driver can be asked to take over control.
- Level 5: No driver required. Apart from setting the target and starting the system, no human intervention is required.

A slightly different definition of levels is known from the Society of Automotive Engineers (SAE). In this regard, reference is made to the SAE J3016 standard. Such definitions could also be used instead of the above given definition.

The great advances in deep neural networks (DNN) in the recent years made vision based detection a primary tool for perception sub-systems within highly automated driving systems. Examples of such tasks include semantic segmentation, 2D/3D object detection, such as pedestrian detection, and image classification. Such DNNs commonly consist of a backbone and a detection head. While the backbones encode the input images into latent-based vectors to be fed into the detection head, the detection heads rely on such vectors to generate the final output of the DNN, which in the case of object detection is the predicted bounding boxes with their associated confidence scores. Accordingly, it is important for the backbones to encode images properly so that the detection heads and the overall DNN can perform at a required level.

In this regard, CN 109635695 B discloses a pedestrian re-identification method based on a triple convolutional neural network. A small batch of samples is formed and global features and local features of each pedestrian image are output. The distance between the global features of every two pedestrian images in the small-batch samples and the distance between the local features of the corresponding body parts is calculated. P × K pairs of triple samples are formed, and a Log-logistic function is used to replace a hinge function to improve a triple convolutional neural network loss function. A trained triple convolutional neural network is obtained, and the target pedestrian image is identified using this trained triple convolutional neural network.

DNNs are prone to challenging data samples and corner cases, such as occluded objects. In the case of pedestrian detection for automated driving tasks, this includes pedestrians occluded by objects such as vehicles, other pedestrians, static traffic objects, vegetation, buildings, etc. In such cases, the DNN would either generate no bounding boxes for such challenging samples or bounding boxes with low confidence scores, leading to being shortlisted in the common post-processing steps such as non-maximum suppression or confidence thresholding. As a consequence, such challenging objects might be overseen by the detector, which in the case of safety-critical applications such as highly automated driving systems, might lead to hazardous events.

It is an object of the present invention to provide improved solutions for object detection using a trained neural network.

This object is achieved by a method according to claim 1 or 5, by a computer program according to claim 10, which implements such a method, by a neural network according to claim 11, by an apparatus according to claim 12 or 13, and by a motor vehicle according to claim 14. The dependent claims include advantageous further developments and improvements of the present principles as described below.

According to a first aspect, a method for training a neural network for object detection comprises the steps of:

- receiving an input image;
- processing the input image with the neural network;
- generating a latent heatmap from latent activations of the neural network;

- determining a heatmap loss between the latent heatmap and a ground truth mask associated with the input image; and
- backpropagating at least the heatmap loss for training the neural network.

Accordingly, a computer program comprises instructions, which, when executed by at least one processor, cause the at least one processor to perform the following steps for training a neural network for object detection:

- receiving an input image;
- processing the input image with the neural network;
- generating a latent heatmap from latent activations of the neural network;
- determining a heatmap loss between the latent heatmap and a ground truth mask associated with the input image; and
- backpropagating at least the heatmap loss for training the neural network.

The term computer has to be understood broadly. In particular, it also includes workstations, distributed systems, and other processor-based data processing devices.

The computer program code can, for example, be made available for electronic retrieval or stored on a computer-readable storage medium.

According to another aspect, an apparatus for training a neural network for object detection comprises:

- an input for receiving an input image;
- a processing module for processing the input image with the neural network;
- a heatmap module for generating a latent heatmap from latent activations of the neural network;
- a loss module for determining a heatmap loss between the latent heatmap and a ground truth mask associated with the input image; and
- a training module for backpropagating at least the heatmap loss for training the neural network.

Most common state of the art deep neural networks do not generate meaningful activation maps in the latent space. According to the invention, a neural network is trained in such a way that meaningful activation maps with minimum or no noise are generated based on the seen objects in the input. This approach leads to high-precision latent heatmaps that can later be used as a source for sanity checks of the final results generated by the detection heads.

The described solution does not disturb the overall training procedure of the neural network, nor does it affect the overall performance of the neural network. In fact, at least for some deep neural networks, it can even lead to a better performance, as it reduces the noise in the latent activation maps generated by the backbone.

Furthermore, deep neural networks are generally considered as black-box modules. Their internal functionality is unclear to human experts. By adapting their training as described above and extracting robust latent activation maps from their internal layers, human experts are able to analyze such maps and trace the roots of possible performance drops.

In an advantageous embodiment, the ground truth mask is generated by converting bounding boxes representing object instances into a binary mask. The availability of a binary mask allows using a binary cross entropy for calculating the loss between the ground truth mask and the heatmap, which is a commonly used loss function in machine learning.

In an advantageous embodiment, for determining the heatmap loss, losses are separately calculated for foreground samples and background samples of the ground truth mask. Typically, the background label is dominant in the ground truth mask. By calculating the loss separately for the samples of foreground and background, a bias of the loss towards the background is avoided.

In an advantageous embodiment, the heatmap loss is added to a main optimization loss function used for training the neural network. By combining the contrastive loss term with the main optimization loss, typically a cross-entropy loss, the neural network is forced to discriminate between the foreground and the background in the latent space. This leads to high-quality latent activation heatmaps. A hyperparameter tuning may be required to combine the two losses in a way to achieve the best result. This can be done through a grid search or based on expert knowledge.

According to another aspect, a neural network for object detection is trained using a method according to the invention. Such a neural network delivers high-quality latent activation heatmaps, which can then be used for improving an output of the neural network.

According to a further aspect, a method for object detection with a neural network trained using a method according to the invention comprises the steps of:

- receiving an input image;
- processing the input image with the neural network;
- generating a latent heatmap from latent activations of the neural network; and
- improving an output of the neural network based on the latent heatmap.

Accordingly, a computer program comprises instructions, which, when executed by at least one processor, cause the at least one processor to perform the following steps for object detection with a neural network trained using a method according to the invention:

- receiving an input image;
- processing the input image with the neural network;
- generating a latent heatmap from latent activations of the neural network; and
- improving an output of the neural network based on the latent heatmap.

The term computer has to be understood broadly. In particular, it also includes electronic control units, embedded devices, and other processor-based data processing devices.

The computer program code can, for example, be made available for electronic retrieval or stored on a computer-readable storage medium.

According to another aspect, an apparatus for object detection with a neural network trained using a method according to the invention comprises:

- an input for receiving an input image;
- a processing module for processing the input image with the neural network;
- a heatmap module for generating a latent heatmap from latent activations of the neural network; and
- a monitoring module for improving an output of the neural network based on the latent heatmap.

In particular for automotive applications it is advantageous if an output of a neural can be subjected to sanity checks, e.g. for identifying potential missed objects. The high-quality latent heatmaps that are delivered by neural networks trained using a method according to the invention are a suitable source for such sanity checks. These latent heatmaps have the advantage that run-time monitoring of the output is possible.

Known approaches are often based on computationally intensive algorithms, which are not always easily applicable to the limited resources present in the deployment devices, such as vehicles. Furthermore, their predictions are prone to be misleading when it comes to challenging cases where the objects might be occluded or only partially visible to the camera. The present solution does not introduce any extra computation flops to the overall architecture of the neural network and does not require extra inference time, as it takes only the same activations that are inferred to the detection head of the neural network from the bottleneck. The efficiency of the whole detection system is, therefore, not affected.

Furthermore, the described solution can also be used for safety argumentation of perception DNNs. For safety argumentation, the DNNs are evaluated on a variety of input datapoints, with cases that lead to misdetection, to find the attention of the backbone based on such activation. This leads to a more transparent artificial intelligence system, which can be further investigated for the roots of errors or performance drops.

The described solution can be easily adapted to any state of the art object detectors that use a convolutional neural network (CNN) as their backbone without degrading their detection performance.

In an advantageous embodiment, improving an output of the neural network comprises determining inconsistencies between the latent heatmap and the output of the neural network. For example, the predictions made in the final output of the neural network may be compared with the latent heatmap to find mismatches. Mismatches include cases where there is an object bounding box in the final detection, which is not represented in the latent heatmap. Or there are areas in the latent heatmap that highlight potential objects, but that are not predicted by the neural network with a corresponding generated bounding box.

In an advantageous embodiment, a warning signal is generated in case an inconsistency is determined. In case a mismatch is detected, the prediction of the neural network is considered not reliable and a warning signal is generated, e.g. for an automated driving system. The warning signal can then be used to trigger such a system to perform alternative actions.

In an advantageous embodiment, improving an output of the neural network comprises adjusting confidences of a prediction set provided by the neural network. Deep neural networks often produce overconfident results. Such overconfident classification scores can be corrected based on the latent heatmaps. This drastically decreases the rates of false positive detections.

In an advantageous embodiment, generating a latent heatmap comprises extracting a feature map from at least one layer of the neural network, averaging the feature map across its channels, applying a sigmoid function to the averaged feature map to generate a predicted probability map, and resizing the predicted probability map to the dimensions of the input image to generate the latent heatmap. In this way, latent heatmaps with the appropriate dimensions are obtained from the latent activations with little computational effort.

Advantageously, a vehicle equipped with a perception system comprises an apparatus according to the invention or is configured to perform a method according to the invention for object detection. The vehicle may be any type of vehicle, e.g. a car, a bus, a motorcycle, a commercial vehicle, in particular a truck, an agricultural machinery, a construction machinery, a rail vehicle, etc. More generally, the invention can be used in all vehicles that need to cope with objects. Advantageously, the perception system is configured to detect pedestrians.

Further features of the present invention will become apparent from the following description and the appended claims in conjunction with the figures.

Fig. 1     schematically illustrates a method for training a neural network for object detection;

Fig. 2     schematically illustrates a first embodiment of an apparatus for training a neural network for object detection;

Fig. 3     schematically illustrates a second embodiment of an apparatus for training a neural network for object detection;

Fig. 4     schematically illustrates a method for object detection with a trained neural network;

Fig. 5     schematically illustrates a first embodiment of an apparatus for object detection with a trained neural network;

Fig. 6     schematically illustrates a second embodiment of an apparatus for object detection with a trained neural network;

Fig. 7     shows a block diagram of an electronics system of a vehicle;

Fig. 8     illustrates an extraction process for a latent heatmap for an exemplary object detection framework; and

Fig. 9     illustrates a confidence correction process based on latent heatmaps.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

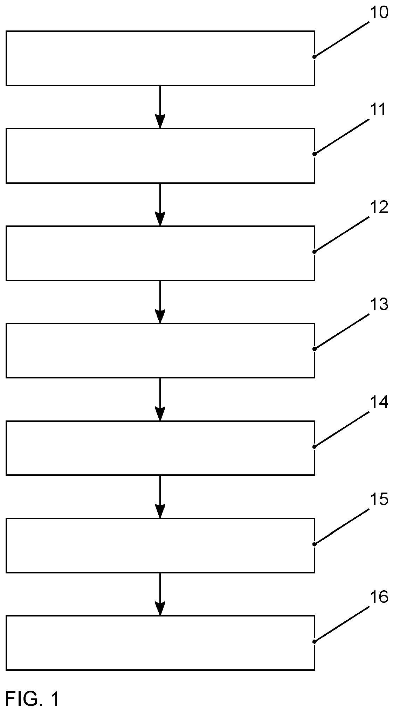

Fig. 1 schematically illustrates a method according to the invention for training a neural network for object detection. In a first step, an input image is received 10, which is then processed 11 with the neural network. Latent activations for the image are extracted 12 from one or more layers of the neural network and a latent heatmap is generated 13 from these latent activations. For generating 13 the latent heatmap, a feature map may be extracted from at least one layer of the neural network. The feature map may then be averaged across its channels and a sigmoid function may be applied to the averaged feature map to generate a predicted probability map. The predicted probability map may then be resized to the dimensions of the input image to generate the latent heatmap. If not yet available, a ground truth mask for the input image may be generated 14 by converting bounding boxes representing object instances into a binary mask. A heatmap loss between the latent heatmap and the ground truth mask is then determined 15. To this end, losses may be separately calculated for foreground samples and background samples of the ground truth mask. At least the heatmap loss is backpropagated 16 for training the neural network. Advantageously, the heatmap loss is added to a main optimization loss function used for training the neural network.

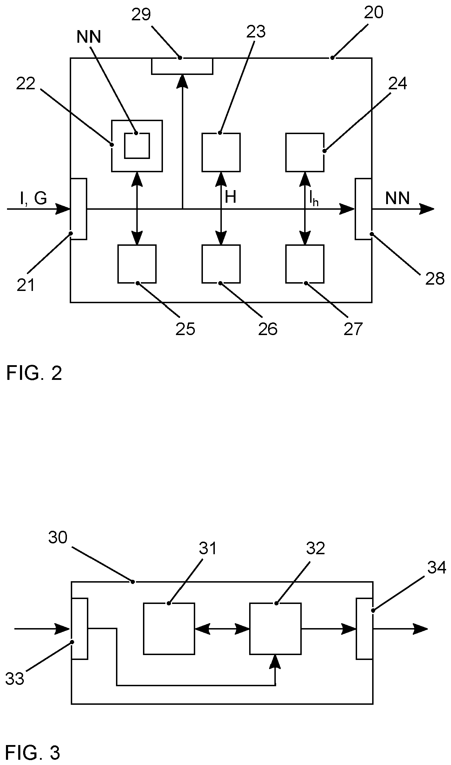

Fig. 2 schematically illustrates a block diagram of a first embodiment of an apparatus 20 according to the invention for training a neural network NN for object detection. The apparatus 20 has an input 21 for receiving an input image I. A processing module 22 is configured to process the input image I with the neural network NN. The processing module 22 may further be configured to extract latent activations for the image from one or more layers of the neural network NN. A heatmap module 23 is configured to generate a latent heatmap H from these latent activations. For generating the latent heatmap H, a feature map may be extracted from at least one layer of the neural network NN. The feature map may then be averaged across its channels and a sigmoid function may be applied to the averaged feature map to generate a predicted probability map. The predicted probability map may then be resized to the dimensions of the input image to generate the latent heatmap H. A loss module 24 is configured to determine a heatmap loss $l_h$ between the latent heatmap H and a ground truth mask G associated with the input image I. To this end, the loss module 24 may calculate losses separately for foreground samples and background samples of the ground truth mask G. The ground truth mask G may be obtained via the input 21 or may be generated by converting bounding boxes representing object instances into a binary mask. A training module 25 is configured to backpropagate at least the heatmap loss $l_h$ for training the neural network NN. Advantageously, the heatmap loss $l_h$ is added to a main optimization loss function used for training the neural network NN. The trained neural network NN may be made available via an output 28. A local storage unit 27 is provided, e.g. for storing data during processing. The output 28 may also be combined with the input 21 into a single bidirectional interface.

The processing module 22, the heatmap module 23, the loss module 24, and the training module 25 may be controlled by a controller 26. A user interface 29 may be provided for enabling a user to modify settings of the processing module 22, the heatmap module 23, the loss module 24, the training module 25, or the controller 26. The processing module 22, the heatmap module 23, the loss module 24, the training module, and the controller 26 can be embodied as dedicated hardware units. Of course, they may likewise be fully or partially combined into a single unit or implemented as software running on a processor, e.g. a CPU or a GPU.

A block diagram of a second embodiment of an apparatus 30 according to the invention for training a neural network for object detection is illustrated in Fig. 3. The apparatus 30 comprises a processing device 31 and a memory device 32. For example, the apparatus 30 may be a computer, a workstation or a distributed system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 27 and the memory device 32 may include volatile and/or non-volatile memory regions and storage devices such as hard disk drives, optical drives, and/or solid-state memories.

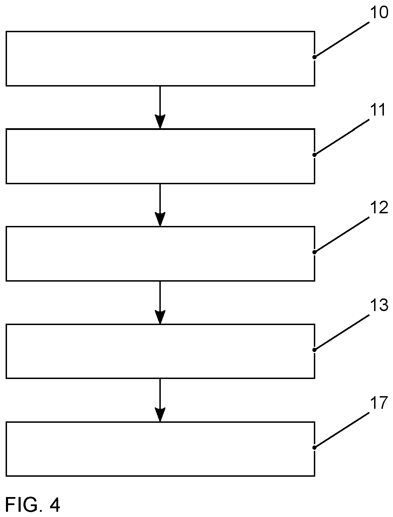

Fig. 4 schematically illustrates a method according to the invention for object detection with a neural network trained using a method according to the invention. In a first step, an input image is received 10, which is then processed 11 with the neural network. Latent activations for the image are extracted 12 from one or more layers of the neural network and a latent heatmap is generated 13 from these latent activations. For generating 13 the latent heatmap, a feature map may be extracted from at least one layer of the neural network. The feature map may then be averaged across its channels and a sigmoid function may be applied to the averaged feature map to generate a predicted probability map. The predicted probability map may then be resized to the dimensions of the input image to generate the latent heatmap. Based on the latent heatmap, an output of the neural network is improved 17. For example, inconsistencies between the latent heatmap and the output of the neural network may be determined. In case an inconsistency is determined, a warning signal may be generated. Alternatively or in addition, confidences of a prediction set provided by the neural network may be adjusted.

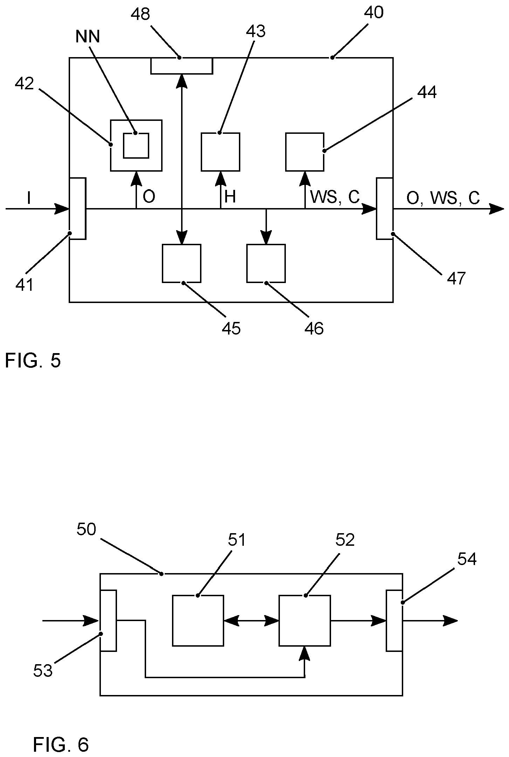

Fig. 5 schematically illustrates a block diagram of a first embodiment of an apparatus 40 according to the invention for object detection with a neural network NN trained using a method according to the invention. The apparatus 40 has an input 41 for receiving an input image I. A processing module 42 is configured to process the input image I with the neural network NN. The processing module 42 may further be configured to extract latent activations for the image from one or more layers of the neural network NN. A heatmap module 43 is configured to generate a latent heatmap H from these latent activations. For generating the latent heatmap H, a feature map may be extracted from at least one layer of the neural network NN. The feature map may then be averaged across its channels and a sigmoid function may be applied to the averaged feature map to generate a predicted probability map. The predicted probability map may then be resized to the dimensions of the input image to generate the latent heatmap H. A monitoring module 44 is configured to improve an output of the neural network NN based on the latent heatmap H. For example, the monitoring module 44 may determine inconsistencies between the latent heatmap H and the output O of the neural network NN. In case an inconsistency is determined, a warning signal WS may be generated. Alternatively or in addition, the monitoring module 44 may adjust confidences C of a prediction set provided by the neural network NN. The output O of the neural network NN as well as the output C, WS of the monitoring module 44 may be made available via an output 47. A local storage unit 46 is provided, e.g. for storing data during processing. The output 47 may also be combined with the input 41 into a single bidirectional interface.

The processing module 42, the heatmap module 43, and the monitoring module 44 may be controlled by a controller 45. A user interface 48 may be provided for enabling a user to modify settings of the processing module 42, the heatmap module 43, the monitoring module 44, or the controller 45. The processing module 42, the heatmap module 43, the monitoring module 44, and the controller 45 can be embodied as dedicated hardware units. Of course, they may likewise be fully or partially combined into a single unit or implemented as software running on a processor, e.g. a CPU or a GPU.

A block diagram of a second embodiment of an apparatus 50 according to the invention for object detection with a neural network trained using a method according to the invention is illustrated in Fig. 6. The apparatus 50 comprises a processing device 51 and a memory device 52. For example, the apparatus 50 may be a computer, an electronic control unit or an embedded device. The memory device 52 has stored instructions that, when executed by the processing device 51, cause the apparatus 50 to perform steps according to one of the described methods. The instructions stored in the memory device 52 thus tangibly embody a program of instructions executable by the processing device 51 to perform program steps as described herein according to the present principles. The apparatus 50 has an input 53 for receiving data. Data generated by the processing device 51 are made available via an output 54. In addition, such data may be stored in the memory device 52. The input 53 and the output 54 may be combined into a single bidirectional interface.

The processing device 51 as used herein may include one or more processing units, such as microprocessors, digital signal processors, or a combination thereof.

The local storage unit 46 and the memory device 52 may include volatile and/or non-volatile memory regions and storage devices such as hard disk drives, optical drives, and/or solid-state memories.

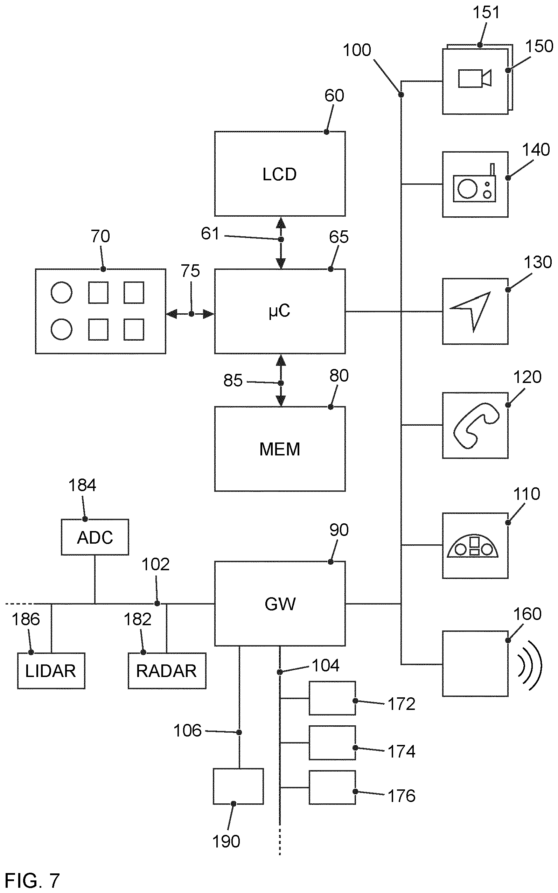

Fig. 7 schematically shows an exemplary block diagram of a board electronics system of a vehicle. Part of the board electronics system is an infotainment system, which comprises a touch-sensitive display unit 60, a computing device 65, an input unit 70, and a memory device 80. The display unit 60 is connected to the computing device 65 via a data line 61 and includes both a display area for displaying variable graphical information and an operator interface (touch-sensitive layer) arranged above the display area for inputting commands by a user. The input unit 70 is connected to the computing device 65 via a data line 75. The memory device 80 is connected to the computing device 65 via a data line 85. In the memory device 80, a pictogram directory and/or symbol directory is deposited with pictograms and/or symbols for possible overlays of additional information.

The other parts of the infotainment system, such as a camera 150, radio 140, navigation device 130, telephone 120 and instrument cluster 110 are connected via a data bus 100 with the computing device 65. As data bus 100, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. The computing device 65 may run a neural network according to the invention for processing images of the cameras 151, e.g., for pedestrian detection. Further control devices, such as an ADC (automatic driving control) unit 184, etc., may be provided in the vehicle. The RADAR and LIDAR sensors 182, 186 may have a scanning range of up to 250 m, whereas the cameras 150, 151 may cover a range from 30 m to 120 m. The components 182 to 186 are connected to another communication bus 102, e.g. an Ethernet-Bus due to its higher bandwidth for data transport. One Ethernet-bus adapted to the special needs of car communication is standardized in the IEEE 802.1Q specification. Moreover, a lot of information about the environment may be received via V2V communication from other vehicles. Particularly for those vehicles that are not in line of sight to the observing vehicle, it is very advantageous to receive the information about their position and motion via V2V communication.

Reference numeral 190 denotes an on-board diagnosis interface, which is connected to another communication bus 106.

For the purpose of transmitting the vehicle-relevant sensor data via the an on-board connectivity module 160 to another vehicle, to other infrastructure, or to a control center computer, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to another vehicle or to the control central computer, the an on-board connectivity module 160 is equipped with a communication interface to receive these data packets and, in turn, to convert them into the transmission format of the appropriate mobile radio standard.

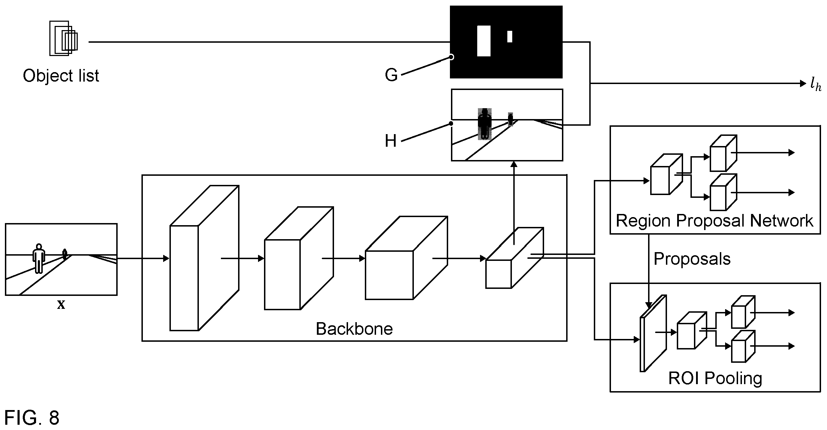

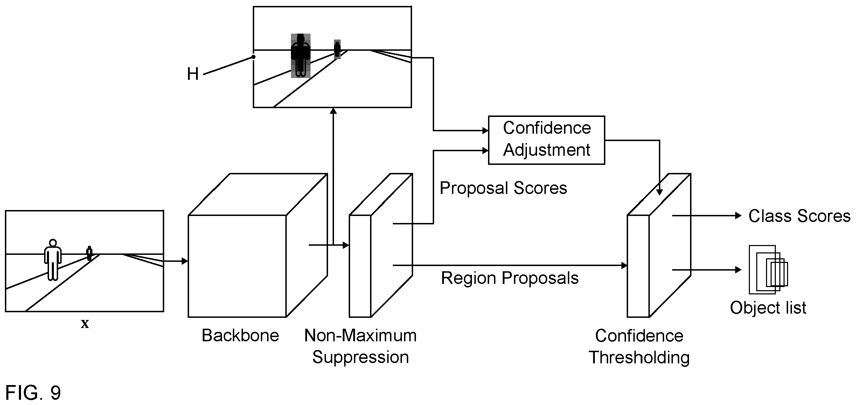

In the following, a preferred embodiment of the invention shall be explained in more detail with reference to Fig. 8 and Fig. 9 using pedestrian detection as an example.

For extracting latent activations and generating the latent heatmaps, the activations are first derived from the last encoding layer of the DNN. An illustration of the extraction point for the object detection framework "Faster R-CNN" is presented in Fig. 8. As shown in this figure, for a given image **x** of size $W_x \times H_x \times C_x$ where $W$, $H$, and $C$ are width, height, and number of channels respectively, the DNN can generate an output that includes a list of bounding boxes with their respective confidence scores. Furthermore, one can extract a feature map from any layer $l \in L$ of the DNN, where L is all the layers of the DNN. This feature map would be of size $W_x' \times H_x' \times F^l$, where $W'$ and $H'$ are relative to the size of the image x and the convolution as well as pooling operations up until layer $l$ and are typically smaller than the input image dimensions. $F^l$ is the number of channels, which is driven from the number $F$ of filters in layer $l$. Extracting the activations of the bottleneck commonly leads to the smallest $W'$ and $H'$ and largest $F$ within the state of the art DNNs.

However, some architectures utilize a single layer as the final layer of the backbone to encode the images and some might utilize a feature-pyramid network (FPN) instead of a single-layer activation to tackle the challenge of object size variations. Therefore, depending on the specific architectures, different encoder layers may be selected for extracting the activations. For architectures such as "Faster R-CNN", which benefit from FPNs, the coarse layer of the FPN is preferably select as the main layer from which the activations are extracted. This is done based on the consideration that after building the feature pyramids with the FPN, the feature maps with a smaller stride / a higher resolution also have stronger features than the design with a single feature map. Therefore, the feature maps with the highest resolution in the feature pyramids are chosen to generate the probability map. For other architectures such as the real-time object detector "YOLOv7", the last three efficient layer aggregation network (ELAN) outputs may be combined to achieve the best results.

As mentioned earlier, extracting the feature activations with this approach leads to a feature vector of size $W_x' \times H_x' \times F^l$, which due to the deepness of the selected layers leads to highest numbers such as 2048. To produce a 2D probability map, a two-step procedure will be performed: first the feature map is averaged across the channels to reduce the channel number to 1, and then the averaged feature maps are passed element-wise through a sigmoid function to limit the values into the range [0, 1]. After this two-step procedure, a heatmap with the shape $W_x' \times H_x'$ is available, where the pixel values in this heatmap can be interpreted as the probability that the area covered by the receptive field of this pixel belongs to the pedestrian parts in the input image.

Finally, in order to match the heatmap dimensions with the input image, the heatmaps are resized to the original $W_x \times H_x$.

Although the above approach leads to extracting and simplifying the feature maps from any state of the art pedestrian detector, it does not automatically lead to high quality and precise activations. Therefore, the DNNs need to be trained accordingly. To this end, a binary latent cross-entropy calculation approach is introduced, which enforces the utilized DNNs to generate precise latent activation heatmaps. In pedestrian detection, for an input image **x** with the size $W_x \times H_x \times C_x$, there exists a list of bounding box dimensions and locations that represent the pedestrian instances in the input image. Using this list, the bounding boxes may be converted into a binary ground truth mask G of size $W_x \times H_x$, where the areas in which pedestrians are present have the value 1 and all the background pixels have the value 0.

This binary ground truth mask G is then used as the ground truth to calculate the loss $l_h$ for the extracted latent heatmap. As the ground truth is binary, i.e., its value is either 0 or 1, the binary cross entropy can be used to calculate the loss between the ground truth mask and the heatmap. The binary cross entropy loss measures the difference relative to the predicted probability distribution, its range is [0, 1]. The closer the loss is to 1, the better the prediction performance. Based on this, for each pixel $p$ at the spatial position $(i,j)$ within the heatmap, the loss $L_h$ between the ground truth binary mask $P(i,j)$ and the generated heatmap $P'(i,j)$ is calculated as:

$$L_{h_{P_\mathbf{x}}} = - \left( P_\mathbf{x}(i,j) \log P_\mathbf{x}'(i,j) + (1 - P_\mathbf{x}(i,j) \log\left(1 - P_\mathbf{x}'(i,j)\right) \right). \qquad (1)$$

One can simply compute the mean of the loss matrix $L_h$ to obtain the final loss term $l_h$, but it is worth mentioning that the ground truth labels are imbalanced. As is apparent from Fig. 8, the background label 0 is dominant. Therefore, simply averaging the loss matrix $L_h$ will bias the final loss $l_h$ towards the background, which is not desired. To solve this problem, the loss can be separately calculated for the samples of foreground and background. To this end, two sets are defined. The first set $S_p$ includes the pixels with the label 1, whereas the second set $S_n$ includes the pixels with the label 0. The two sets are defined as:

$$\begin{aligned} S_p &= \{p \in P | p = 1\} \\ S_n &= \{p \in P | p = 0\} \end{aligned} \qquad (2)$$

The mean loss is then calculated separately for the two sets:

$$\begin{aligned} l_{h_p} &= \frac{1}{n(S_p)} \sum_p^{p \in S_p} L_h(p) \\ l_{h_n} &= \frac{1}{n(S_n)} \sum_p^{p \in S_n} L_h(p) \end{aligned} \qquad (3)$$

where $n(S_p)$ and $n(S_n)$ are the number of elements, i.e., the cardinal numbers of the sets $S_p$ and $S_n$. Finally, by taking the mean value of $l_{h_p}$ and $l_{h_n}$, the final loss $l_h$ can be expressed as:

$$l_h = \frac{1}{2}\left( l_{h_p} + l_{h_n} \right). \qquad (4)$$

Notably, for an input image without any pedestrians, which leads to an empty positive set $S_p$ and the $l_{h_p} = NaN$ due to the division by zero in equation (3), the final loss is equal to the $l_{h_n}$.

By adding the final loss $l_h$ to the standard losses of the detectors, the model can be trained jointly with this new loss term as follows:

$$l_f = l_o + \alpha\, l_h\,, \qquad (5)$$

where $\alpha$ is a hyper-parameter that can be tuned via common hyper-parameter tuning techniques, and $l_o$ is the main optimization loss function used for training the DNN in the first place, which in the present example is the common cross-entropy loss function for object detection.

The described approach is particularly useful for detecting potentially overlooked pedestrians by performing sanity checks on the final output of a pedestrian detector. However, as the small latent activations are resized to the size of the input images, the highlighted areas do not precisely fit the area of the bounding boxes.

Nevertheless, a sanity check approach allows checking for inconsistencies between the heatmaps and the final output, which can be very effective for corner case samples and samples with extreme difficulty levels, such as extreme occlusion, illumination issues, etc. To this end, a threshold is preferably applied to the extracted heatmaps to distinguish between the foreground and background regions, which would lead to sparse segmentations of the highlighted areas. Subsequently, it is checked for the segmented areas to have at least a bounding box generated by the pedestrian detector, which can be done by both instance-level comparison or pixel level comparison. For example, in case of instance-level comparison, for each predicted bounding box there must be an active segment from the heatmap. In case of instance pixel level comparison, for each image there must exist an intersection over union (IoU) above $n$ percent between the highlighted segments and the predicted bounding boxes. A pedestrian is defined as a positive match with the heatmap if the intersection with the ground truth bounding box is above *n* percent. These matches can be used to quantify how many annotated pedestrian instances in the image are covered by the heatmap through metrics such as recall.

Accordingly, in order to identify the potentially overlooked instances during runtime, at least the following two approaches may be used.

1) Intersection over Union analysis: With this approach, the IoU between the heatmap and a mask generated based on the predicted bounding boxes can efficiently be calculated. If the IoU is below a certain threshold, the image sample can be marked as a potentially overlooked pedestrian.

2) False positive bounding boxes: In the object instance level, the overlap between a predicted bounding box and positive heatmap areas can be quantified by calculating the intersection of the two divided by the area of the detected bounding box. If a bounding box has an overlap of less than *n* percent, it can be marked as false positive.

Furthermore, the heatmaps may be utilized for adjusting the confidence of the DNN. An illustration of this approach is presented in Fig. 9. As shown in this figure, for the input image x, the heatmap is first extracted as described above. This heatmap is the used for adjusting the confidence of the DNN for the prediction set generated by the detection head for the input image x before applying the confidence threshold short-listing, which leads to dropping the low confidence bounding boxes for the final prediction.

The confidence adjustment may be done by multiplying the confidence of each predicted bounding box by the latent activation heatmaps in the areas that the bounding box represents. In other words, for every pixel *px* within the bounding box *b* with the coordinates $(x_1,x_2,y_1,y_2)$ and confidence *c,* a confidence adjustment map will be computed as follows:

$$c_{\text{new}} = \frac{\frac{1}{(x_2 - x_1) \cdot (y_2 - y_1)} \sum_{i=x_1}^{x_2} \sum_{j=y_1}^{y_2} P'(i,j)}{1 + e^{-\beta(c-\gamma)}} \tag{6}$$

where $\beta$ and $\gamma$ control the steepness and bias of the function, respectively, which are chosen through grid search. In this way, the negative heatmap areas can suppress the high confidence scores of the bounding boxes and positive areas can boost their low scores.

**Reference numerals**

| | |
|---|---|
| 10 | Receive input image |
| 11 | Process input image with neural network |
| 12 | Extract latent activations |
| 13 | Generate a latent heatmap |
| 14 | Generate ground truth mask |
| 15 | Determine heatmap loss |
| 16 | Backpropagate heatmap loss for training |
| 17 | Improve output of neural network |
| 20 | Apparatus |
| 21 | Input |
| 22 | Processing module |
| 23 | Heatmap module |
| 24 | Loss module |
| 25 | Training module |
| 26 | Controller |
| 27 | Local storage unit |
| 28 | Output |
| 29 | User interface |
| 30 | Apparatus |
| 31 | Processing device |
| 32 | Memory device |
| 33 | Input |
| 34 | Output |

| | |
|---|---|
| 40 | Apparatus |
| 41 | Input |
| 42 | Processing module |
| 43 | Heatmap module |
| 44 | Monitoring module |
| 45 | Controller |
| 46 | Local storage unit |
| 47 | Output |
| 48 | User interface |
| 50 | Apparatus |
| 51 | Processing device |
| 52 | Memory device |
| 53 | Input |
| 54 | Output |
| 60 | Display Unit |
| 61 | Data line to display unit |
| 65 | Computing device |
| 70 | Input unit |
| 75 | Data line to input unit |
| 80 | Memory unit |
| 85 | Data line to memory unit |
| 90 | Gateway |
| 100 | First data bus |
| 102 | Second data bus |
| 104 | Third data bus |
| 106 | Fourth data bus |
| 110 | Instrument cluster |
| 120 | Telephone |
| 130 | Navigation device |
| 140 | Radio |
| 150 | Camera |
| 151 | Further cameras |
| 160 | On-board connectivity module |
| 172 | Engine control unit |
| 174 | Electronic stability control unit |
| 176 | Transmission control unit |
| 182 | RADAR sensor |
| 184 | Automatic driving control unit |
| 186 | LIDAR sensor |
| 190 | On-board diagnosis interface |
| C | Confidence |
| G | Ground truth mask |
| H | Latent heatmap |
| I | Input image |
| $I_h$ | Heatmap loss |
| $I_o$ | Min optimization loss function |
| NN | Neural network |
| WS | Warning signal |

## Claims

1. A method for training a neural network (NN) for object detection, the method comprising:

   - receiving (10) an input image (I);
   - processing (11) the input image (I) with the neural network (NN);
   - generating (13) a latent heatmap (H) from latent activations of the neural network;
   - determining (15) a heatmap loss ($I_h$) between the latent heatmap (H) and a ground truth mask (G) associated with the input image (I); and

- backpropagating (16) at least the heatmap loss ($I_h$) for training the neural network (NN).

2. The method according to claim 1, wherein the ground truth mask (G) is generated (14) by converting bounding boxes representing object instances into a binary mask.

3. The method according to claim 2, wherein for determining (15) the heatmap loss ($I_h$), losses are separately calculated for foreground samples and background samples of the ground truth mask (G).

4. The method according to one of the preceding claims, further comprising adding the heatmap loss ($I_h$) to a main optimization loss function ($I_o$) used for training the neural network (NN).

5. A method for object detection with a neural network (NN) trained using a method according to one of claims 1 to 4, the method comprising:

   - receiving (10) an input image (I);
   - processing (11) the input image (I) with the neural network (NN);
   - generating (13) a latent heatmap (H) from latent activations of the neural network (NN); and
   - improving (17) an output of the neural network (NN) based on the latent heatmap (H).

6. The method according to claim 5, wherein improving (17) an output of the neural network (NN) comprises determining inconsistencies between the latent heatmap (H) and the output of the neural network (NN).

7. The method according to claim 6, further comprising generating a warning signal (WS) in case an inconsistency is determined.

8. The method according to claim 5, wherein improving (17) an output of the neural network (NN) comprises adjusting confidences (C) of a prediction set provided by the neural network (NN).

9. The method according to one of the preceding claims, wherein generating (13) a latent heatmap (H) comprises extracting a feature map from at least one layer of the neural network (NN), averaging the feature map across its channels, applying a sigmoid function to the averaged feature map to generate a predicted probability map, and resizing the predicted probability map to the dimensions of the input image (I) to generate the latent heatmap (H).

10. A computer program comprising instructions, which, when executed by a computer, cause the computer to perform a method according to any of claims 1 to 9.

11. A neural network (NN) for object detection, wherein the neural network (NN) is trained using a method according to one of claims 1 to 4.

12. An apparatus (20) for training a neural network (NN) for object detection, the apparatus (20) comprising:

   - an input (21) for receiving (10) an input image (I);
   - a processing module (22) for processing (11) the input image (I) with the neural network (NN);
   - a heatmap module (23) for generating (13) a latent heatmap (H) from latent activations of the neural network;
   - a loss module (24) for determining (15) a heatmap loss ($I_h$) between the latent heatmap (H) and a ground truth mask (G) associated with the input image (I); and
   - a training module (25) for backpropagating (16) at least the heatmap loss ($I_h$) for training the neural network (NN).

13. An apparatus (40) for object detection with a neural network (NN) trained using a method according to one of claims 1 to 4, the apparatus (40) comprising:

   - an input (41) for receiving (10) an input image (I);
   - a processing module (42) for processing (11) the input image (I) with the neural network (NN);
   - a heatmap module (43) for generating (13) a latent heatmap (H) from latent activations of the neural network (NN); and
   - a monitoring module (44) for improving (17) an output of the neural network (NN) based on the latent heatmap (H).

14. A motor vehicle (60) equipped with a perception system (62), wherein the perception system (62) comprises an apparatus (20) according to claim 13 or is configured to perform a method according to any of claims 5 to 9 for object detection.

15. The motor vehicle (60) according to claim 14, wherein the perception system (62) is configured to detect pedestrians.

10

11

12

13

14

15

16

FIG. 1

FIG. 2

FIG. 3

FIG. 4

FIG. 5

FIG. 6

FIG. 7

FIG. 8

FIG. 9

Europäisches
Patentamt

European
Patent Office

Office européen
des brevets

## EUROPEAN SEARCH REPORT

**Application Number**

**EP 23 20 8671**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sudre Carole H.: "Generalised Dice Overlap as a Deep Learning Loss Function for Highly Unbalanced Segmentations" In: "Deep Learning in Medical Image Analysis and Multimodal Learning for Clinical Decision Support : Third International Workshop, DLMIA 2017, and 7th International Workshop, ML-CDS 2017, Held in Conjunction with MICCAI 2017, Québec City, QC, Canada, September 14, Proceedings", 2017, Springer International Publishing, Cham, XP093148226, ISSN: 0302-9743 ISBN: 978-3-319-67558-9 vol. 10553, pages 240-248, Retrieved from the Internet: URL:http://link.springer.com/content/pdf/10.1007/978-3-319-67558-9.pdf> | 1,3,5-8, 10-12, 14,15 | INV. G06V10/82 G06N3/045 G06T7/10 G06T7/194 G06V20/58 |
| Y | * the whole document * | 3 | |
| X | HE KAIMING ET AL: "Mask R-CNN", 2017 IEEE INTERNATIONAL CONFERENCE ON COMPUTER VISION (ICCV), 22 October 2017 (2017-10-22), pages 2961-2969, XP093148216, DOI: 10.1109/ICCV.2017.322 ISBN: 978-1-5386-1032-9 Retrieved from the Internet: URL:http://openaccess.thecvf.com/content_ICCV_2017/papers/He_Mask_R-CNN_ICCV_2017_paper.pdf> | 1,4-13 | TECHNICAL FIELDS SEARCHED (IPC) G06V G06T G06N |
| Y | * the whole document * | 3 | |

-/--

The present search report has been drawn up for all claims

| Place of search | Date of completion of the search | Examiner |
|---|---|---|
| The Hague | 5 April 2024 | Neubüser, Bernhard |

EPO FORM 1503 03.82 (P04C01)

Europäisches
Patentamt

European
Patent Office

Office européen
des brevets

# EUROPEAN SEARCH REPORT

Application Number

EP 23 20 8671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ronneberger Olaf ET AL: "U-net: convolutional networks for biomedical image segmentation", arXiv (Cornell University), 18 May 2015 (2015-05-18), pages 1-8, XP093148222, Retrieved from the Internet: URL:https://arxiv.org/pdf/1505.04597.pdf) [retrieved on 2024-04-04] | 1,5-8, 10-15 | |
| Y | * the whole document * | 3 | |
| T | Ren Shaoqing ET AL: "Faster r-cnn: Towards real-time object detection with region proposal networks", arXiv (Cornell University), 6 January 2016 (2016-01-06), pages 1-14, XP093148205, Retrieved from the Internet: URL:https://arxiv.org/pdf/1506.01497.pdf [retrieved on 2024-04-04] | 1-15 | |
| T | Girshick Ross: "Fast R-CNN", arXiv.org, 27 September 2015 (2015-09-27), pages 1-9, XP093148204, Retrieved from the Internet: URL:https://arxiv.org/pdf/1504.08083.pdf [retrieved on 2024-04-04] | 1-15 | TECHNICAL FIELDS SEARCHED (IPC) |
| L | Tian Zhi ET AL: "BoxInst: High-Performance Instance Segmentation with Box Annotations", arxiv.org, 3 December 2020 (2020-12-03), pages 1-10, XP093148210, Retrieved from the Internet: URL:https://arxiv.org/pdf/2012.02310.pdf [retrieved on 2024-04-04] | 2 | |

-/--

The present search report has been drawn up for all claims

| Place of search | Date of completion of the search | Examiner |
|---|---|---|
| The Hague | 5 April 2024 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 23 20 8671**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | BAYZIDI YASIN ET AL: "Performance Limiting Factors of Deep Neural Networks for Pedestrian Detection", 33RD BRITISH MACHINE VISION CONFERENCE 2022, BMVC 2022, 21 November 2022 (2022-11-21), pages 1-27, XP093148213, London, UK Retrieved from the Internet: URL:https://mediatum.ub.tum.de/doc/1692827/1692827.pdf> ----- | 1 | |
| A | Bellete Tadewos: "Convert Object detection Dataset with Bounding Boxes to Segmentation using SAM Part 1", , 16 June 2023 (2023-06-16), pages 1-16, XP093148380, Retrieved from the Internet: URL:https://medium.com/@tadewoswebkreator/convert-object-detection-dataset-with-bounding-boxes-to-segmentation-using-sam-f6d8ac5280b0 [retrieved on 2024-04-05] * the whole document * ----- | 2 | |
| A | Bellete Tadewos: "Converting Bounding box to segmentation dataset Part 2", , 19 June 2023 (2023-06-19), pages 1-10, XP093148386, Retrieved from the Internet: URL:https://medium.com/@tadewoswebkreator/converting-bounding-box-to-segmentation-dataset-part-2-fb77cb0c806e [retrieved on 2024-04-05] * the whole document * ----- | 2 | |

TECHNICAL FIELDS
SEARCHED (IPC)

The present search report has been drawn up for all claims

| Place of search | Date of completion of the search | Examiner |
|---|---|---|
| The Hague | 5 April 2024 | Neubüser, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 3 of 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 109635695 B